# EUROPEAN PATENT APPLICATION

(11) **EP 3 572 927 A1**
(43) Date of publication of application: **27.11.2019**
(21) Application number: 19175656.8
(22) Date of filing: 21.05.2019
(51) Int. Cl.: G06F 3/12

(54) **OUTPUT SYSTEM, OUTPUT DEVICE, AND CONTROL METHOD THEREOF**

(30) Priority: 21.05.2018 JP 2018097194
(71) Applicant: Toshiba Tec Kabushiki Kaisha, 141-8562 Tokyo (JP)
(72) Inventor: Kobayashi, Tohru, Tokyo, 141-8562 (JP)
(74) Representative: Hoffmann Eitle

(57) **Abstract**

According to one embodiment, a plurality of output devices includes a communication unit, a storage unit, an intensity transmission unit, a comparison unit, and a control unit. The communication unit communicates with another output device. The storage unit stores an intensity of a host output device. The intensity transmission unit transmits the intensity of the host output device which is stored in the storage unit to the other output device through the communication unit. The comparison unit compares an intensity received from the other output device through the communication unit with the intensity of the host output device which is stored in the storage unit. The control unit controls so as to perform output based on output data when the intensity of the host output device is higher than the intensity received from the other output device as a result of the comparison performed by the comparison unit.

## Description

### CROSS-REFERENCE TO RELATED APPLICATIONS

This application is based upon and claims the benefit of priority from Japanese Patent Application No. 2018-097194, filed in May 21, 2018, the entire contents of which are incorporated herein by reference.

### FIELD

Embodiments described herein relate generally to an output system, an output device used for the system, and a control method of causing a computer to function as the output device.

### BACKGROUND

There are output systems configured such that a plurality of output devices can receive output data wirelessly transmitted from a host device. In such a type of output system, any one output device among the plurality of output devices is set to be a main device, and the other output devices are set to be sub-devices. A host device transmits output data with the output device set to be the main device as a destination. The output device receiving output data addressed to itself performs output based on the output data. Here, when output is not normally performed, the host device switches a transmission destination of output data to an output device set to be a sub-device. In this manner, an output system in which an output loss is reduced by automatically switching an output device serving as an output destination of output data is already known.

However, in such a type of output system of the related art, a transmission source device of output data such as a host device has to selectively switch a transmission destination of output data. There are demands for output systems capable of reducing an output loss without selectively switching a transmission destination of output data by a transmission source device.

### SUMMARY OF THE INVENTION

One of the objects of the present invention is to improve prior art techniques and overcome at least some of the prior art problems as for instance above illustrated.

According to a fist aspect of the present invention, it is provided an output system comprising: a plurality of output devices that performs output based on output data, the plurality of output devices including: a communication unit configured to communicate with another output device; a storage unit configured to store an intensity of a host output device; an intensity transmission unit configured to transmit the intensity of the host output device which is stored in the storage unit to the other output device through the communication unit; a comparison unit configured to compare an intensity received from the other output device through the communication unit with the intensity of the host output device which is stored in the storage unit; and a control unit configured to control so as to perform output based on the output data when the intensity of the host output device is higher than the intensity received from the other output device as a result of the comparison performed by the comparison unit.

Optionally, in the output system according to the first aspect of the invention, the plurality of output devices further includes a declaration transmission unit configured to transmit a declaration signal for declaring that the host output device performs output to the other output device through the communication unit when the intensity of the host output device is higher than the intensity received from the other output device as a result of the comparison performed by the comparison unit, and the control unit transmits the declaration signal by the declaration transmission unit, but compares the intensity of the other output device which is a transmission source of the declaration signal with the intensity of the host output device when the declaration signal is received from the other output device, and controls so as not to perform output based on the output data when the intensity of the host output device is lower.

Optionally, in the output system according to the first aspect of the invention, the plurality of output devices further includes a measurement unit configured to measure a radio wave reception intensity with respect to a transmission source device that transmits the output data, and the storage unit stores the radio wave reception intensity measured by the measurement unit as the intensity of the host output device.

According to a second aspect of the invention, it is provided an output device included as a component of an output system together with another output device performing output based on output data, the output device comprising: a communication unit configured to communicate with the other output device; a storage unit configured to store an intensity of a host output device; an intensity transmission unit configured to transmit the intensity of the host output device stored in the storage unit to the other output device through the communication unit; a comparison unit configured to compare an intensity received from the other output device through the communication unit with the intensity of the host output device which is stored in the storage unit; and a control unit configured to control so as to perform output based on the output data when the intensity of the host output device is higher than the intensity received from the other output device as a result of the comparison performed by the comparison unit.

Optionally, the output device according to the second aspect of the invention further comprises a declaration transmission unit configured to transmit a declaration signal for declaring that the host output device performs output to the other output device through the communication unit when the intensity of the host output device is high as a result of the comparison performed by the comparison unit, wherein the control unit transmits the declaration signal by the declaration transmission unit, but compares the intensity of the other output device which is a transmission source of the declaration signal with the intensity of the host output device when the declaration signal is received from the other output device, and performs control so as not to perform output based on the output data when the intensity of the host output device is lower.

According to a third aspect of the invention, it is provided a control method of causing a computer of an output device included as a component of an output system together with another output device performing output based on output data to function as: a storage unit configured to store an intensity of a host output device; an intensity transmission unit configured to transmit the intensity of the host output device which is stored in the storage unit to the other output device through a communication unit; a comparison unit configured to compare an intensity received from the other output device through the communication unit with the intensity of the host output device which is stored in the storage unit; and a control unit configured to control so as to perform output based on the output data when the intensity of the host output device which is stored in the storage unit is higher than the intensity received from the other output device as a result of the comparison performed by the comparison unit.

In one example, the intensity of a device (as e.g. above or herein below illustrated) may represent or be a radio wave reception intensity.

### DESCRIPTION OF THE DRAWINGS

FIG. 1 is a conceptual diagram of a POS system according to an embodiment;
FIG. 2 is a block diagram illustrating a main circuit configuration of a POS terminal in the POS system;
FIG. 3 is a block diagram illustrating a main circuit configuration of a printer in the POS system;
FIG. 4 is a schematic view illustrating a configuration of an intensity table included in the printer;
FIG. 5 is a flow diagram illustrating a procedure of a periodic signal transmission executed by a processor of the POS terminal;
FIG. 6 is a flow diagram illustrating a procedure of a printing job output executed by the processor of the POS terminal;
FIG. 7 is a flow diagram illustrating a procedure of abnormality monitoring executed by a processor of the printer;
FIG. 8 is a flow diagram illustrating a procedure of a reception executed by the processor of the printer;
FIG. 9 is a flow diagram illustrating a procedure of a reception executed by the processor of the printer; and
FIG. 10 is a flow diagram illustrating a procedure of a reception executed by the processor of the printer.

### DETAILED DESCRIPTION

An exemplary embodiment provides an output system capable of reducing an output loss without selectively switching a transmission destination of output data by a transmission source device, an output device used for the system, and a control method of causing a computer to function as the output device.

In general, according to one embodiment, an output system includes a plurality of output devices performing output based on output data. The plurality of output devices includes a communication unit, a storage unit, an intensity transmission unit, a comparison unit, and a control unit. The communication unit communicates with another output device. The storage unit stores an intensity of a host output device. The intensity transmission unit transmits the intensity of the host output device which is stored in the storage unit to the other output device through the communication unit. The comparison unit compares an intensity received from the other output device through the communication unit with the intensity of the host output device which is stored in the storage unit. The control unit controls so as to perform output based on output data when the intensity of the host output device is higher than the intensity received from the other output device as a result of the comparison performed by the comparison unit.

Hereinafter, an embodiment of an output system capable of reducing an output loss without selectively switching a transmission destination of output data by a transmission source device and an output device used for the system will be described with reference to the accompanying drawings.

Meanwhile, in the present embodiment, a point of sales (POS) system used in a retail store or the like is exemplified. That is, a POS terminal that generates printing data is exemplified as a transmission source device. A printer capable of performing printing output is exemplified as an output device. There are a plurality of printers. The output system is constituted by the plurality of printers.

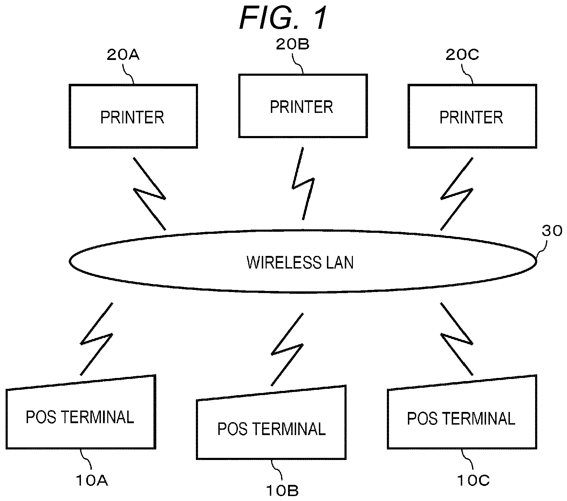

FIG. 1 is a conceptual diagram of the POS system according to the present embodiment. The POS system includes a plurality of POS terminals 10 and a plurality of printers 20. The plurality of POS terminals 10 and the plurality of printers 20 can communicate with each other in a wireless manner through a wireless local area network (LAN) 30 adopting a standard such as Wi-Fi (registered trademark).

In FIG. 1, three POS terminals 10 (10A, 10B, and 10C) are exemplified as the POS terminals 10, and three printers 20 (20A, 20B, and 20C) are exemplified as the printers 20. The number of POS terminals 10 and the number of printers 20 are not limited thereto. Two or more printers 20 may be paired for one POS terminal. In this case, one printer 20 may be paired with a plurality of POS terminals 10. In the present embodiment, it is assumed that the printers 20 (20A, 20B, and 20C) are paired with three POS terminals 10 (10A, 10B, and 10C), respectively.

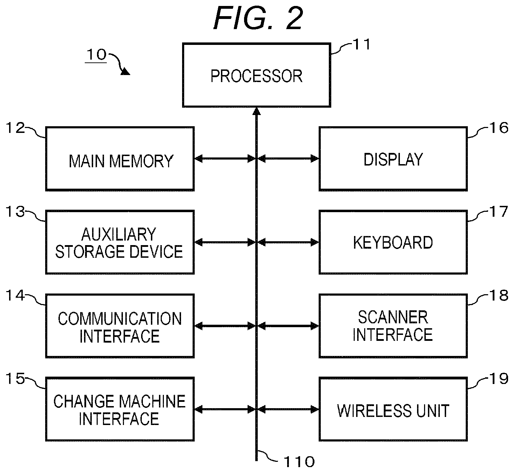

FIG. 2 is a block diagram illustrating a main circuit configuration of the POS terminal 10. The POS terminal 10 includes a processor 11, a main memory 12, an auxiliary storage device 13, a communication interface 14, a change machine interface 15, a display 16, a keyboard 17, a scanner interface 18, a wireless unit 19, and a system transmission line 110. The system transmission line 110 includes an address bus, a data bus, a control signal line, and the like. In the POS terminal 10, the processor 11, the main memory 12, the auxiliary storage device 13, the communication interface 14, the change machine interface 15, the display 16, the keyboard 17, the scanner interface 18, and the wireless unit 19 are connected to the system transmission line 110. In the POS terminal 10, a computer is constituted by the processor 11, the main memory 12, and the auxiliary storage device 13 and the system transmission line 110 connecting these components to each other.

The processor 11 corresponds to a central portion of the computer. The processor 11 controls the respective portions in order to realize various functions as the POS terminal 10 in accordance with an operating system or an application program. The processor 11 is, for example, a central processing unit (CPU) .

The main memory 12 corresponds to a main storage portion of the computer. The main memory 12 includes a nonvolatile memory region and a volatile memory region. The main memory 12 stores an operating system or an application program in the nonvolatile memory region. The main memory 12 may also store data, which is required when the processor 11 controls the respective portions, in the nonvolatile or volatile memory region. The main memory 12 uses the volatile memory region as a work area in which data is appropriately rewritten by the processor 11. The nonvolatile memory region is, for example, a read only memory (ROM). The volatile memory region is, for example, a random access memory (RAM) .

The auxiliary storage device 13 corresponds to an auxiliary storage portion of the computer. For example, an electric erasable programmable read-only memory (EEPROM), a hard disk drive (HDD), a solid state drive (SSD), or the like may be the auxiliary storage device 13. The auxiliary storage device 13 stores data used when the processor 11 performs various processes, data created through a process performed by the processor 11, and the like. The auxiliary storage device 13 may also store the above-described application program.

The communication interface 14 performs data communication with a server connected through a network. The server is, for example, a store server that collects data of commodities registered in the POS terminals 10 to manage sales, stocks, and the like in the entire store.

The change machine interface 15 performs data communication with an automatic change machine connected through a communication cable. The automatic change machine includes an insertion port and a discharge port for cash. The automatic change machine counts the number of cash inserted from the insertion port for each denomination to calculate an amount of money inserted, and transmits data of the amount of money inserted to the POS terminal 10. The automatic change machine pays out cash equivalent to change from the discharge port based on the change data received from the POS terminal 10.

The display 16 is a display device of the POS terminal 10. The display 16 displays, for example, items names, prices, the total price, and the like of commodities registered in the POS terminal 10. Two types of displays 16 for an operator and a customer may be provided. The display 16 may be a touch panel also having a function as an input device.

The keyboard 17 is an input device of the POS terminal 10. The keyboard 17 is provided with various keys related to commodity registration such as, a numeric keypad, a multiplication key, a subtotal key, a present total key, and a cancel key.

The scanner interface 18 performs data communication with a scanner connected through a communication cable. The scanner reads a code symbol such as a bar code or a two-dimensional data code attached to a commodity, and transmits the read data to the POS terminal 10. The scanner may be of a type that reads the code symbol through scanning with a laser beam. The scanner may be of a type that reads the code symbol from an image captured by an imaging device.

The wireless unit 19 performs data communication with the plurality of printers 20 through the wireless LAN 30. The wireless unit 19 can also perform data communication with other POS terminals 10 through the wireless LAN 30.

The POS terminal 10 having such a configuration has at least the following first to fourth functions. The first function is a function of registering sale data of a commodity bought by a customer. The second function is a function of generating accounting data based on the registered commodity sale data. The third function is a function of accepting payment from the customer based on the generated accounting data and settling a commercial transaction with the customer. The fourth function is a function of generating a printing job of a receipt showing details of the commercial transaction and transmitting the printing job to the printer 20 in a wireless manner.

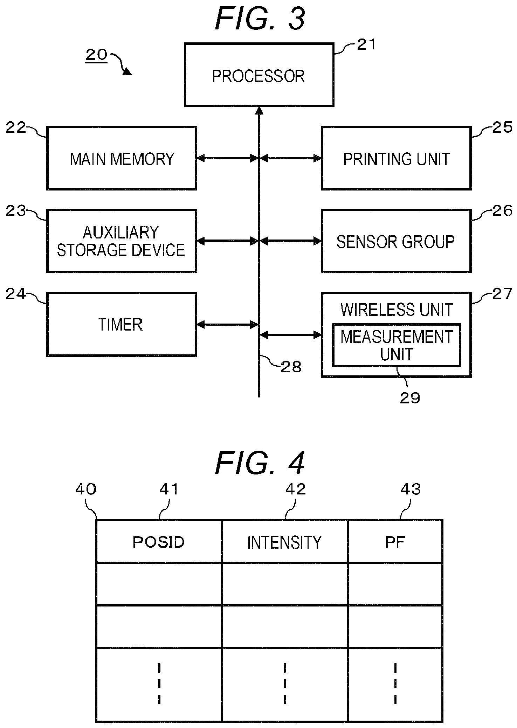

FIG. 3 is a block diagram illustrating a main circuit configuration of the printer 20. The printer 20 includes a processor 21, a main memory 22, an auxiliary storage device 23, a timer 24, a printing unit 25, a sensor group 26, a wireless unit 27, and a system transmission line 28. The system transmission line 28 includes an address bus, a data bus, a control signal line, and the like. In the printer 20, the processor 21, the main memory 22, the auxiliary storage device 23, the timer 24, the printing unit 25, the sensor group 26, and the wireless unit 27 are connected to the system transmission line 28. In the printer 20, a computer is constituted by the processor 21, the main memory 22, and the auxiliary storage device 23 and the system transmission line 28 connecting these components to each other.

The processor 21 corresponds to a central portion of the computer. The processor 21 controls the respective portions in order to realize various functions as the printer 20 in accordance with an operating system or an application program. The processor 21 is, for example, a CPU.

The main memory 22 corresponds to a main storage portion of the computer. The main memory 22 includes a nonvolatile memory region and a volatile memory region. The main memory 22 stores an operating system or an application program in the nonvolatile memory region. The main memory 22 may also store data, which is required when the processor 21 controls the respective portions, in the nonvolatile or volatile memory region. The main memory 22 uses the volatile memory region as a work area in which data is appropriately rewritten by the processor 21. The nonvolatile memory region is, for example, a ROM. The volatile memory region is, for example, a RAM.

The auxiliary storage device 23 corresponds to an auxiliary storage portion of the computer. For example, an EEPROM, an HDD, an SSD, or the like may be the auxiliary storage device 23. The auxiliary storage device 23 stores data used when the processor 21 performs various processes, data created through a process performed by the processor 21, and the like. The auxiliary storage device 23 may also store the above-described application program.

The timer 24 starts a clocking operation in response to an instruction given from the processor 21. The timer 24 times out when a set time is clocked. A period during which the timer 24 times out can be set arbitrarily. In the present embodiment, a time-out period is a stay period until the printer 20 executes a printing job transmitted from the POS terminal 10. When the stay period is long, a waiting period until a receipt is issued increases, which is not preferable. In consideration of this point, a time-out period is set to 3 s in the present embodiment.

The printing unit 25 controls a printing head to print characters, a figure, and the like corresponding to printing data on a printing sheet transported by a sheet transport mechanism. A printing method of the printing unit 25 is not particularly limited. For example, the printing method may be a thermosensitive method, a thermal transfer method, a dot impact method, an inkjet method, or the like.

The sensor group 26 includes various monitoring sensors. For example, a sensor for monitoring the shortage of printing sheets, a sensor for monitoring clogging of a printing sheet, a sensor for monitoring a failure of the printing head, and the like, are included in the sensor group 26. In addition, if the printer 20 is of a type in which a housing is opened and closed in order to replace printing sheets, a sensor that monitors an open/closed state of the housing is also included in the sensor group 26.

The wireless unit 27 performs data communication with the plurality of POS terminals 10 through the wireless LAN 30. The wireless unit 27 can also perform data communication with other printers 20 through the wireless LAN 30. The wireless unit 27 functions as a communication unit. The wireless unit 27 includes a measurement unit 29 for measuring the intensity of received radio waves. The measurement unit 29 measures a receive signal strength indicator (RSSI) value of radio waves received by the wireless unit 27. The measurement unit 29 functions as a measurement unit.

The printer 20 having such a configuration includes an intensity table 40 (FIG. 4) and a control program in order to constitute a printing output system capable of reducing a printing output loss without selectively switching a transmission destination of a printing job by the POS terminal 10 which is a transmission source device of a printing job.

FIG. 4 is a schematic view illustrating a configuration of the intensity table 40. As illustrated in the drawing, the intensity table 40 includes a first column 41, a second column 42, and a third column 43. The first column 41 is a region for describing POSID. The POSID is a unique code which is set for each POS terminal 10 in order to individually identify the plurality of POS terminals 10. The second column 42 is a region for describing intensity data. The intensity data is data indicating an RSSI value with respect to the POS terminal 10 specified by the POSID described in the first column 41 of the same row. The third column 43 is an area for describing a primary flag PF. The primary flag PF is one bit data which is set to "1" in a state where a print job transmitted from the POS terminal 10 specified by the POSID described in the first column 41 of the same row is preferentially executed and is set to "0" in a state where the print job is not executed. The intensity table 40 is formed in, for example, the volatile region of the main memory 22. The intensity table 40 may be formed in the auxiliary storage device 23.

The control program is a program for causing the computer included in the printer 20 to function as a storage unit, an intensity transmission unit, a comparison unit, a declaration transmission unit, and a control unit. The control program is stored in the main memory 22 or the auxiliary storage device 23. The control program can be recorded in a removable storage medium or can be stored in the main memory 22 or the auxiliary storage device 23 through communication via a network. The storage medium may have any form as long as it can store a program like a CD-ROM, a memory card, and the like and can be read by the printer 20.

Hereinafter, each unit will be described focusing on the printer 20A.

The storage unit is a unit that stores an intensity of the host printer 20A. The intensity transmission unit is a unit that transmits the intensity of the host printer 20A which is stored in the storage unit to the other printers 20B and 20C through the wireless unit 27 which is a communication unit. The comparison unit is a unit that compares intensities received from the other printers 20B and 20C through the wireless unit 27 and the intensity of the host printer 20A which is stored in the storage unit with each other. The declaration transmission unit is a unit that transmits a declaration signal for declaring that the host printer 20A performs printing output to the other printers 20B and 20C through the wireless unit 27 when the intensity of the host printer 20A is high as a result of the comparison performed by the comparison unit. The control unit is a unit that performs control so as to perform printing output based on printing data when the intensity of the host printer 20A is higher than the intensities received from the other printers 20B and 20C as a result of the comparison performed by the comparison unit. In addition, although the control unit transmits the declaration signal by the declaration transmission unit, but a unit that compares the intensity of the printer 20B or 20C which is a transmission source of a declaration signal and the intensity of the host printer 20A with each other when receiving the declaration signal from another printer 20B or 20C and for performing control so as not to perform printing output based on printing data when the intensity of the host printer 20A is lower is included.

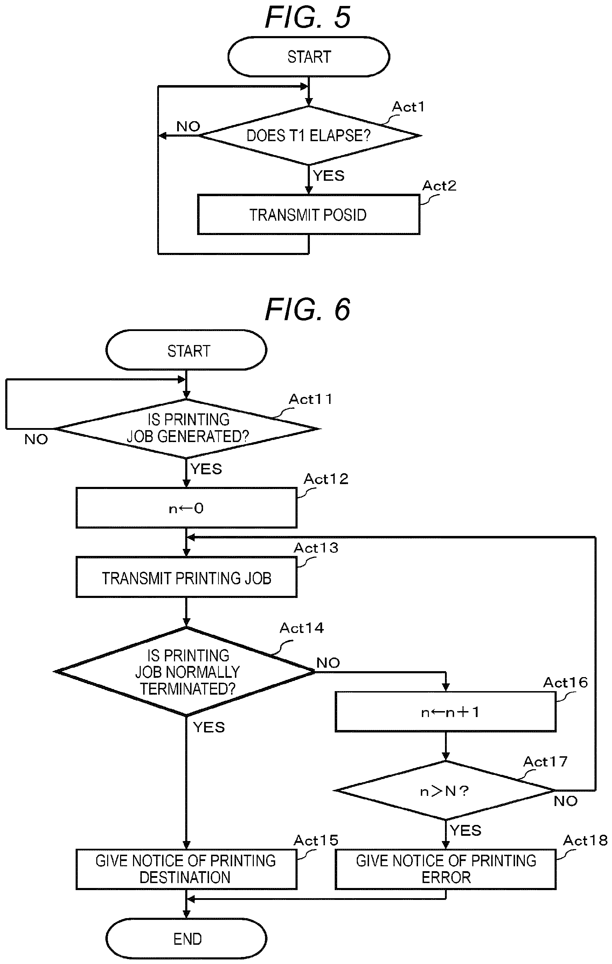

Hereinafter, each unit will be described specifically using flow diagrams of FIGS. 5 to 10. Meanwhile, details of a process described using FIGS. 5 to 10 are an example. Processing procedures and processing contents are not particularly limited as long as the same result can be obtained.

FIGS. 5 and 6 are flow diagrams illustrating a procedure of main information processing executed by the processor 11 of the POS terminal 10. In detail, FIG. 5 is a flow diagram illustrating a procedure of a periodic signal transmission, and FIG. 6 is a flow diagram illustrating a procedure of a printing job output. The processor 11 can execute the above-described periodic signal transmission and printing job output in parallel.

First, the periodic signal transmitting process will be described.

As illustrated in FIG. 5, the processor 11 waits until a first fixed period of time T1 elapses, as Act1. The first fixed period of time T1 is a period of time suitable for monitoring conditions of wireless communication with the POS terminal 10 by each printer 20. It is arbitrary to what extent the first fixed period of time T1 is set. In the present embodiment, the first fixed period of time T1 is set to 500 ms.

When the first fixed period of time T1 elapses, the processor 11 determines YES in Act1 and proceeds to Act2. The processor 11 controls the wireless unit 19 so as to transmit POSID as Act2. By this control, the wireless unit 19 transmits a data signal including POSID which is set in advance for the POS terminal 10 through broadcast communication in a wireless manner. The POSID is stored by the auxiliary storage device 13. Hereinafter, a data signal including POSID will be referred to as a POSID signal.

The data signal wirelessly transmitted from the wireless unit 19 through broadcast communication is received by the plurality of printers 20 through the wireless LAN 30. An operation when the printer 20 receives a data signal will be described later.

The processor 11 completing the process of Act2 returns to Act1. That is, the processor 11 waits for the elapse of the first fixed period of time T1. Thus, each of the POS terminals 10A, 10B, and 10C repeatedly transmits a POSID signal in a wireless manner whenever the first fixed period of time T1 elapses.

Next, a printing job output will be described.

The processor 11 waits for the generation of a printing job as Act11, as illustrated in FIG. 6. For example, when a printing job of a receipt is generated using the above-described fourth function, the processor 11 determines YES in Act11 and proceeds to Act12. The processor 11 resets a retry counter n to "0" as Act12. The retry counter n is formed using, for example, a portion of the volatile region of the main memory 12.

The processor 11 controls the wireless unit 19 so as to transmit a printing job as Act13. By this control, the wireless unit 19 transmits the printing job through broadcast communication in a wireless manner. The printing job includes POSID which is set in advance for the POS terminal 10.

The printing job wirelessly transmitted from the wireless unit 19 through broadcast communication is received by the plurality of printers 20 through the wireless LAN 30. An operation when the printer 20 receives a printing job will be described later.

The processor 11 confirms whether or not a printing job is normally terminated in the printer 20, as Act14. A response signal indicating normal termination is wirelessly transmitted from a printer 20 capable of normally executing a printing job. A response signal indicating abnormal termination is wirelessly transmitted from a printer 20 incapable of normally executing a printing job. When a response signal indicating normal termination is received within a predetermined period of time, the processor 11 determines that a printing job is normally terminated. When a response signal indicating abnormal termination is received within a predetermined period of time or a response signal indicating normal termination or abnormal termination cannot be received within a predetermined period of time, the processor 11 determines that a printing job is not normally terminated.

When the processor 11 determines that a printing job is normally terminated, the processor determines YES in Act14 and proceeds to Act15. The processor 11 displays information capable of identifying the printer 20 normally terminating a printing job on the display 16 to notify an operator of a printing destination, as Act15. Therefore, the operator can know by which printer 20 the printing job is executed.

When the processor 11 determines that a printing job is not normally terminated, the processor determines NO in Act14 and proceeds to Act16. The processor 11 counts up the retry counter n by "1" as Act16. The processor 11 confirms whether or not the retry counter n exceeds an upper limit value N as Act17. When the retry counter n does not exceed the upper limit value N, the processor 11 determines NO in Act17 and returns to Act13. That is, the processor 11 controls the wireless unit 19 again so as to transmit a printing job. In this manner, when a printing job is not normally terminated, the processor 11 repeatedly transmits the printing job by the number of times equivalent to the upper limit value N. In addition, when the retry counter n exceeds the upper limit value N, the processor 11 determines YES in Act17 and proceeds to Act18. The processor 11 displays information indicating that a printing error occurs on the display 16 to notify an operator of the printing error, as Act18. Therefore, the operator can know that the printing of the printing job is not successful.

When the process of Act15 or Act18 is terminated, the processor 11 terminates the printing job output. Thus, when a printing job is generated, each of the POS terminals 10A, 10B, and 10C transmits the printing job through broadcast communication in a wireless manner. Therefore, the processor 11 of each of the POS terminals 10A, 10B, and 10C does not need to select a transmission destination when transmitting a printing job to the printer 20.

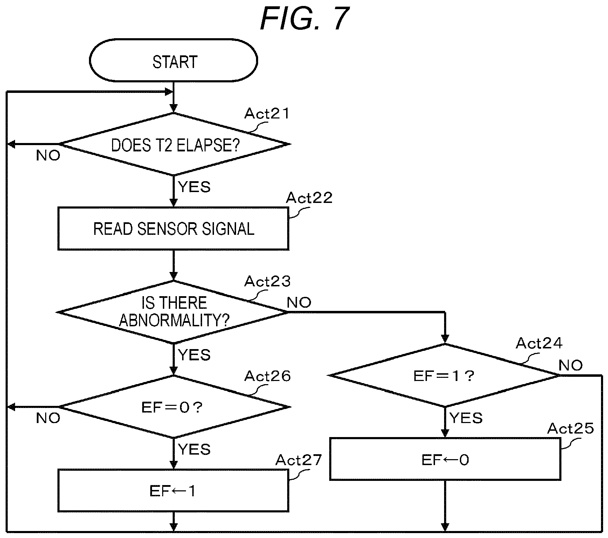

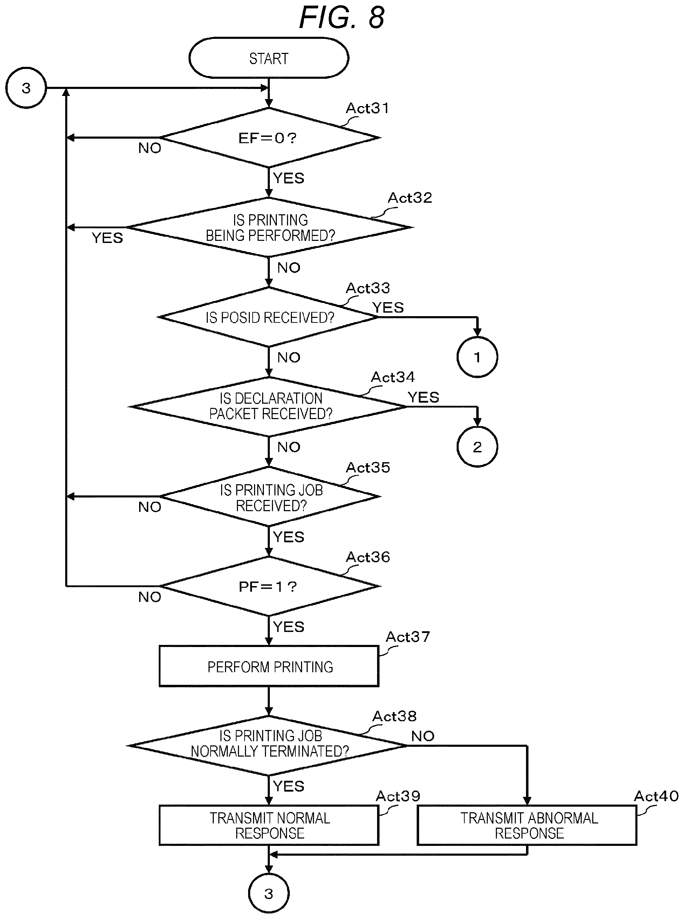

FIGS. 7 to 10 are flow diagrams illustrating a procedure of main information processing executed by the processor 21 of the printer 20. In detail, FIG. 7 is a flow diagram illustrating a procedure of abnormality monitoring, and FIGS. 8 to 10 are flow diagrams illustrating a procedure of a reception. The processor 21 can execute the above-described abnormality monitoring and reception in parallel.

First, the abnormality monitoring will be described.

As illustrated in FIG. 7, the processor 21 waits for the elapse of a second fixed period of time T2 as Act21. The second fixed period of time T2 is a period of time suitable for monitoring whether or not an abnormality occurs in the printer 20 and whether the abnormality is cancelled. It is arbitrary to what extent the second fixed period of time T2 is set. In the present embodiment, the second fixed period of time T2 is set to 1 s.

When the second fixed period of time T2 elapses, the processor 21 determines YES in Act21 and proceeds to Act22. The processor 21 reads a signal of the sensor group 26 as Act22. The processor 21 determines whether or not an abnormality occurs in the printer 20 based on the signal of the sensor group 26, as Act23. When none of signals of the sensors constituting the sensor group 26 are signals indicating an abnormality, the processor 21 determines that an abnormality does not occur. When a signal of at least one sensor is a signal indicating an abnormality, the processor 21 determines that an abnormality occurs.

When it is determined that an abnormality does not occur, the processor 21 determines NO in Act23 and proceeds to Act24. The processor 21 confirms whether or not an error flag EF is "1" as Act24. The error flag EF is one bit data for identifying whether or not an abnormality occurs in the printer 20. The error flag EF is stored in, for example, the volatile region of the main memory 22. The error flag EF in the present embodiment is set to "1" when an abnormality occurs and is set to "0" when an abnormality does not occur. When the error flag EF is "0", the processor 21 determines NO in Act24 and returns to Act21. That is, the processor 21 waits for the elapse of the second elapsed time T2.

When the error flag EF is "1", the processor 21 determines YES in Act24 and proceeds to Act25. The processor 21 changes the error flag EF to "0" as Act25. Thereafter, the processor 21 returns to Act21. That is, the processor 21 changes the error flag EF to "0" when an abnormality is cancelled, and waits for the elapse of the second elapsed time T2.

When it is determined that an abnormality occurs based on a signal of the sensor group 26, the processor 21 determines YES in Act23 and proceeds to Act26. The processor 21 confirms whether or not the error flag EF is "0" in Act26. When the error flag EF is "1", the processor 21 determines NO in Act26 and returns to Act21. That is, the processor 21 waits for the elapse of the second elapsed time T2.

When the error flag EF is "0", the processor 21 determines YES in Act26 and proceeds to Act27. The processor 21 changes the error flag EF to "1" as Act27. Thereafter, the processor 21 returns to Act21. That is, the processor 21 changes the error flag EF to "1" when an abnormality occurs, and waits for the elapse of the second elapsed time T2.

Thus, each of the printers 20A, 20B, and 20C reads a signal of the sensor group 26 whenever the second elapsed time T2 elapses and determines whether or not an abnormality occurs . In addition, each of the printers 20A, 20B, and 20C sets the error flag EF to "1" when an abnormality occurs, and repeatedly performs a process of setting the error flag EF to "0" when an abnormality does not occur.

Next, the reception will be described.

As illustrated in FIG. 8, the processor 21 checks an error flag EF as Act31. When the error flag EF is "1", the processor 21 determines NO in Act31 and returns to the process of Act31. That is, the processor 21 waits for the change of the error flag EF to "0".

When the error flag EF is "0" or when the error flag EF is changed to "0", the processor 21 determines YES in Act31 and proceeds to Act32. The processor 21 confirms whether or not the printing unit 25 is performing printing as Act32. When the printing unit 25 is performing printing, the processor 21 determines YES in Act32 and returns to Act31.

When the printing unit 25 is not performing printing, the processor 21 determines NO in Act32 and proceeds to Act33. The processor 21 confirms whether or not a POSID signal is received as Act33. When the POSID signal is not received, the processor 21 determines NO in Act33 and proceeds to Act34. The processor 21 confirms whether or not a primary declaration packet is received as Act34. The primary declaration packet will be described later. When the primary declaration packet is not received, the processor 21 determines NO in Act34 and proceeds to Act35. The processor 21 confirms whether or not a printing job is received as Act35. When the printing job is not received, the processor 21 determines NO in Act35 and returns to Act31.

In this manner, the processor 21 waits the reception of the POSID signal, the primary declaration packet, or the printing job under conditions in which the error flag EF is "0" and the printing unit 25 is not performing printing, through the processes of Act31 to Act35. That is, the processor 21 waits for the reception of the POSID signal, the primary declaration packet, or the printing job under conditions in which an error does not occur in a host printer and a printing job is not being performed.

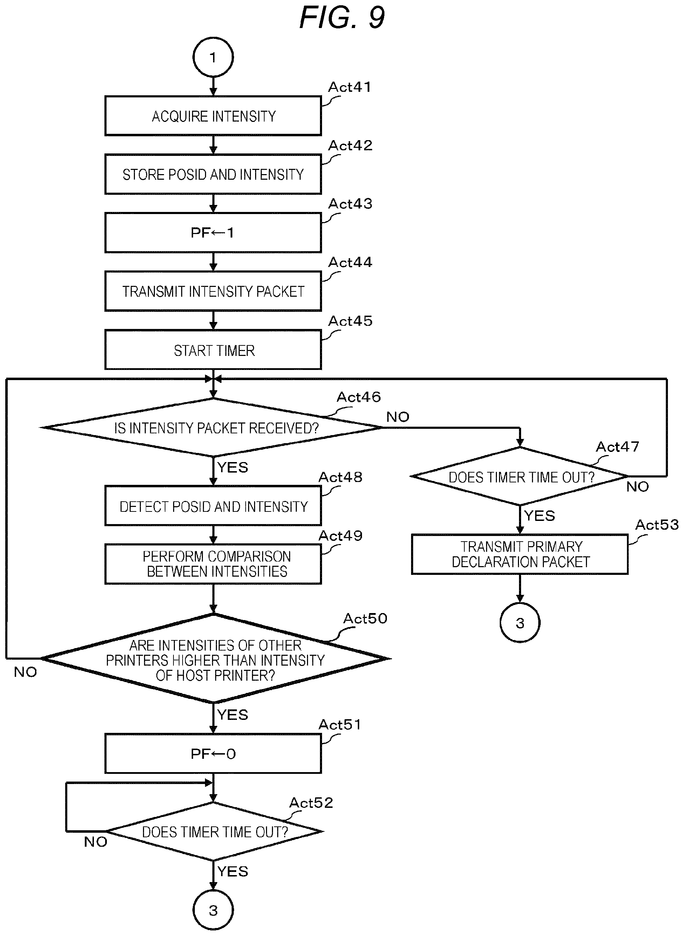

When a POSID signal transmitted from each of the POS terminals 10 in a wireless manner is received, the processor 21 determines YES in Act33 and proceeds to Act41 of FIG. 9. The processor 21 acquires an RSSI value measured by the measurement unit 29 when a POSID signal is received, as Act41. When an RSSI value can be acquired, the processor 21 associates POSID included in the POSID signal and the RSSI value with each other and writes them in the first column 41 and the second column 42 of the intensity table 40, as Act42. In this case, when the same POSID is already written in the first column 41, the processor 21 overwrites the RSSI value in the second column 42 associated with the first column 41 in which the same POSID is written. In addition, the processor 21 writes "1" as a primary flag PF in the third column 43 associated with the first column 41 and the second column 42 in which the POSID and the RSSI value are written, as Act43.

Thus, in the intensity table 40, the latest RSSI value when receiving POSID signals wirelessly transmitted from the POS terminals 10 at intervals of the first fixed period of time T1 is stored in association with POSID of each of the POS terminals 10. Here, a computer mainly constituted by the processor 21 functions as a storage unit by executing the processes of Act 41 and Act 42 in cooperation with the intensity table 40.

When the processes of Act41 to Act43 are terminated, the processor 21 controls the wireless unit 27 so as to transmit an intensity packet as Act44. By this control, the wireless unit 27 transmits the intensity packet through broadcast communication in a wireless manner. The intensity packet includes the POSID and the RSSI value which are written in the intensity table 40 in the process of Act42. That is, the intensity packet includes data of the intensity of the host printer.

The intensity packet wirelessly transmitted from the wireless unit 27 through broadcast communication is received by another printer 20 through the wireless LAN 30. Here, a computer mainly constituted by the processor 21 functions as an intensity transmission unit by executing the process of Act44 in cooperation with the wireless unit 27.

The processor 21 controlling the transmission of the intensity packet starts the timer 24 as Act45. The processor 21 confirms whether or not the intensity packet wirelessly transmitted from the other printer 20 through broadcast communication is received, as Act46. When the intensity packet is not received, the processor 21 confirms whether or not the timer 24 times out as Act47. When the timer 24 does not time out, the processor 21 determines NO as Act47 and returns to Act46. Thus, the processor 21 waits for the reception of the intensity packet or the time-out of the timer 24 as Act46 and Act47.

When the intensity packet wirelessly transmitted from the other printer 20 is received by the wireless unit 27 before the timer 24 times out, the processor 21 detects POSID and an RSSI value included in the received intensity packet, as Act48. In addition, the processor 21 compares the RSSI value written in the intensity table 40 in association with the POSID, that is, the intensity of the host printer with the RSSI value included in the received intensity packet, that is, the intensity of the other printer, as Act49. Here, the processor 21 functions as a comparison unit through the processes of Act45 to Act50.

The processor 21 determines whether or not the intensity of the other printer is higher than the intensity of the host printer, as Act50. When the intensity of the other printer is equal to or lower than the intensity of the host printer, the processor 21 determines NO in Act50 and returns to Act46. The processor 21 waits for the reception of the next intensity packet or time-out.

When the intensity of the other printer is higher than the intensity of the host printer, the processor 21 determines YES in Act50 and proceeds to Act51. The processor 21 rewrites the primary flag PF, which is written in the intensity table 40 in association with the POSID included in the intensity packet received from the other printer 20, to "0" as Act51. Thereafter, the processor 21 waits for the time-out of the timer 24 as Act52. When it is confirmed that the timer 24 times out, the processor 21 determines YES in Act52 and returns to Act31 of FIG. 8.

Therefore, for example, in a case where an RSSI value when the printer 20A receives a POSID signal wirelessly transmitted from the POS terminal 10A is equal to or larger than an RSSI value when the printer 20B receives the POSID signal, the primary flag PF is not changed to "0" in the printer 20A. That is, when the intensity of the host printer is equal to or higher than the intensity of the other printer, the primary flag PF remains "1". On the other hand, when the intensity of the host printer is lower than the intensity of the other printer, the primary flag PF is set to "0". Such an operation is the same also when compared with an RSSI value when the printer 20C receives the same POSID signal.

Therefore, for example, in the printer 20 having the highest intensity with respect to the POS terminal 10A under conditions in which an abnormality does not occur and printing is not being performed, a primary flag PF associated with POSID of the POS terminal 10A is set to "1". In the other printers 20, the primary flag PF is set to "0". Similarly, for example, in the printer 20 having the highest intensity with respect to the POS terminal 10B, a primary flag PF associated with POSID of the POS terminal 10B is set to "1". In the other printers 20, the primary flag PF is set to "0". In this case, in one printer 20, a primary flag PF associated with POSID of the plurality of POS terminals 10 may be set to "1".

When it is confirmed that the timer 24 times out in a waiting state of Act46 and Act47, the processor 21 determines YES in Act47 and proceeds to Act53. The processor 21 controls the wireless unit 27 so as to transmit a primary declaration packet as Act53. By this control, the wireless unit 27 transmits the primary declaration packet through broadcast communication in a wireless manner. The primary declaration packet includes the POSID and the RSSI value which are written in the intensity table 40 in the process of Act42.

The primary declaration packet wirelessly transmitted from the wireless unit 27 through broadcast communication is received by another printer 20 through the wireless LAN 30. Here, the processor 21 functions as a declaration transmission unit by executing the process of Act53 in cooperation with the wireless unit 27. The processor 21 controlling the transmission of the primary declaration packet returns to Act31 of FIG. 8.

In this manner, for example, when the printer 20 having the highest intensity with respect to the POS terminal 10A is the printer 20B, a primary declaration packet for the POS terminal 10A is transmitted from the printer 20B. In addition, the primary declaration packet is received by the other printers 20A and 20C. However, for example, the printer 20A may fail in the reception of an intensity packet wirelessly transmitted from the printer 20B. In this case, when it is assumed that the intensity of the printer 20A for the POS terminal 10A is higher than that of the printer 20C, the printer 20A may also transmit a primary declaration packet for the POS terminal 10A, similar to the printer 20B.

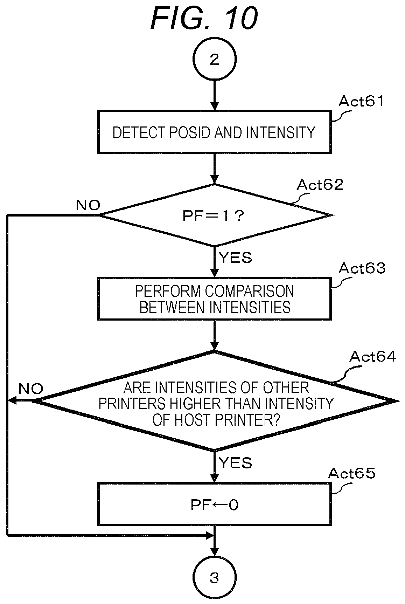

When a primary declaration packet transmitted from another printer 20 is received in a waiting state of Act31 to Act35, the processor 21 determines YES in Act34 and proceeds to Act61 of FIG. 10. The processor 21 detects POSID and an RSSI value included in the received primary declaration packet, as Act61. In addition, the processor 21 confirms whether or not a primary flag PF written in the intensity table 40 in association with the POSID is "1", as Act62. When the primary flag PF is "0", the processor 21 determines NO in Act62 and returns to Act31 of FIG. 8.

When the primary flag PF is "1", the processor 21 determines YES in Act62 and proceeds to Act63. The processor 21 compares the RSSI value written in the intensity table 40 in association with the POSID detected from the primary declaration packet, that is, the intensity of the host printer with the RSSI value detected from the primary declaration packet, that is, the intensity of the other printer, as Act63. The processor 21 determines whether or not the intensity of the other printer is higher than the intensity of the host printer, as Act64. When the intensity of the other printer is equal to or lower than the intensity of the host printer, the processor 21 determines NO in Act64 and returns to Act31 of FIG. 8.

When the intensity of the other printer is higher than the intensity of the host printer, the processor 21 determines YES in Act64 and proceeds to Act65. The processor 21 rewrites the primary flag PF, which is confirmed in the process of Act62, to "0" as Act65. Thereafter, the processor 21 returns to Act31 of FIG. 8.

Therefore, when the plurality of printers 20 transmit a primary declaration packet with respect to a common POS terminal 10, a primary flag PF written in the intensity table 40 associated with POSID of the POS terminal 10 is maintained at "1" in only the printer 20 having the highest intensity with respect to the POS terminal 10. In the printers 20 having the second or lower intensity, the primary flag PF is changed to "0". In this manner, even when a primary flag PF is temporarily set to "1" in the plurality of printers 20 with respect to one POS terminal 10, it is converged to a situation where the primary flag PF of only one printer 20 is maintained at "1" as long as a wireless communication environment is good.

When a printing job wirelessly transmitted from one POS terminal 10 is received in a waiting state of Act31 to Act35, the processor 21 determines YES in Act35 and proceeds to Act36. The processor 21 confirms whether or not primary flag PF written in the intensity table 40 in association with POSID included in the printing job is "1", as Act36. When the primary flag PF is not "1", the processor 21 determines NO in Act36 and returns to Act31.

When the primary flag PF is "1", the processor 21 determines YES in Act36 and proceeds to Act37. The processor 21 executes a printing job as Act37. That is, the processor 21 controls the printing unit 25 based on printing data included in the printing job so as to print the printing data on a printing sheet.

In this manner, when a printing job is received from the POS terminal 10 identified by POSID of which the primary flag PF is "1", the processor 21 executes the printing job. Even when a printing job is received from the POS terminal 10 identified by POSID of which the primary flag PF is "0", the processor 21 does not execute the printing job. The processor 21 cancels the printing job.

Here, a computer mainly constituted by the processor 21 functions as a control unit by executing the processes of Act34 to Act37 of FIG. 8, the processes of Act43 and Act50 to Act52 of FIG. 9, and the processes of Act61 to Act65 of FIG. 10 in cooperation with the printing unit 25.

The processor 21 confirms whether or not a printing job is normally terminated, as Act38. When the printing job is normally terminated, the processor 21 determines YES in Act38 and proceeds to Act39. The processor 21 controls the wireless unit 27 so as to transmit a response signal indicating normal termination with respect to the POS terminal 10 which is a printing job transmission source, as Act39. By this control, the wireless unit 27 wirelessly transmits the response signal indicating normal termination to the POS terminal 10 which is a printing job transmission source through unicast communication.

When a printing job is not normally terminated, the processor 21 determines NO in Act38 and proceeds to Act40. The processor 21 controls the wireless unit 27 so as to transmit a response signal indicating abnormal termination to the POS terminal 10 which is a printing job transmission source, as Act40. By this control, the wireless unit 27 wirelessly transmits the response signal indicating abnormal termination to the POS terminal 10 which is a printing job transmission source through unicast communication.

When the processes of Act39 or Act40 are terminated, the processor 21 returns to Act31.

In this manner, according to the present embodiment, for example, a printing job generated by the POS terminal 10A is executed in a printer having the highest intensity with respect to the POS terminal 10A, for example, the printer 20A. However, when an abnormality occurs in the printer 20A, the printing job is executed in a printer having the second highest intensity with respect to the POS terminal 10A, for example, the printer 20B. In addition, when the printer 20B is performing printing, the printing job is executed in a printer having the third highest intensity with respect to the POS terminal 10A, for example, the printer 20C. In this case, the POS terminal 10A does not need to switch a transmission destination of a printing job from the printer 20A to the printer 20B or the printer 20C. Basically, wireless transmission is performed only once through broadcast communication. Therefore, it is possible to reduce an output loss without selectively switching a transmission destination of a printing job by the POS terminal 10A which is a transmission source device of a printing job. Such an operational effect is the same even when the POS terminal 10 which is a transmission source device of a printing job is the POS terminal 10B or the POS terminal 10C.

Meanwhile, according to the present embodiment, there is a possibility that the same printing job may be executed by the plurality of printers 20 due to a temporary deterioration of a communication environment. However, an output loss does not occur even when the same printing job is executed by the plurality of printers 20, and thus an effect of reducing an output loss may be achieved. In addition, since such an event is automatically solved by improving the communication environment, the reliability of the system is not impaired.

Incidentally, in the present embodiment, for example, the intensity of each of the printers 20A, 20B, and 20C with respect to the POS terminal 10A is set to be a radio wave reception intensity when a POSID signal periodically transmitted from the POS terminal 10A is received by each of the printers 20A, 20B, and 20C. In general, the value of the radio wave reception intensity increases as a distance between the POS terminal 10A and the printer 20 decreases. Therefore, according to the present embodiment, the printer 20 executing a printing job transmitted from the POS terminal 10 with the highest priority can be set to be the printer 20 closest to the POS terminal 10 with a high probability.

An embodiment of an output system capable of reducing an output loss without selectively switching a transmission destination of output data by a transmission source device and an output device used for the system is described above. Such an embodiment is not limited thereto.

For example, in the embodiment, the intensity of each of the printers 20 is set to be a radio wave reception intensity. With respect to this point, for example, a priority which is set arbitrarily by a system manager may be set to be an intensity of each of the printer 20. As the ranking of the priority becomes higher, the intensity increases.

When a priority is set to be an intensity, a priority which is set by a system manager with respect to the POS terminal 10 identified by POSID written in the first column 41 may be written in the second column 42 of the intensity table 40. In addition, the processor 21 of each of the printers 20 may execute the processes of Act41 to Act53 of FIG. 9, for example, whenever the first fixed period of time T1 elapses. Thereby, a priority which is set arbitrarily can be set to be an intensity of each of the printer 20. In this case, the process of Act33 of FIG. 8 is unnecessary. In addition, the periodic signal transmitting process executed by the processor 11 of the POS terminal 10 is also unnecessary.

In the embodiment, the output system using the plurality of printers 20 constituting the POS system is illustrated. The output system is not limited thereto. An output device may be replaced with a display device. Alternatively, the output device may be configured as a sound output device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions as defined by the appended claims.

## Claims

1. An output system comprising:
a plurality of output devices that performs output based on output data,
the plurality of output devices including:
a communication unit configured to communicate with another output device;
a storage unit configured to store an intensity of a host output device;
an intensity transmission unit configured to transmit the intensity of the host output device which is stored in the storage unit to the other output device through the communication unit;
a comparison unit configured to compare an intensity received from the other output device through the communication unit with the intensity of the host output device which is stored in the storage unit; and
a control unit configured to control so as to perform output based on the output data when the intensity of the host output device is higher than the intensity received from the other output device as a result of the comparison performed by the comparison unit.

2. The output system according to claim 1, wherein
the plurality of output devices further includes a declaration transmission unit configured to transmit a declaration signal for declaring that the host output device performs output to the other output device through the communication unit when the intensity of the host output device is higher than the intensity received from the other output device as a result of the comparison performed by the comparison unit, and
the control unit transmits the declaration signal by the declaration transmission unit, but compares the intensity of the other output device which is a transmission source of the declaration signal with the intensity of the host output device when the declaration signal is received from the other output device, and controls so as not to perform output based on the output data when the intensity of the host output device is lower.

3. The output system according to claim 1 or 2, wherein
the plurality of output devices further includes a measurement unit configured to measure a radio wave reception intensity with respect to a transmission source device that transmits the output data, and
the storage unit stores the radio wave reception intensity measured by the measurement unit as the intensity of the host output device.

4. An output device included as a component of an output system together with another output device performing output based on output data, the output device comprising:
a communication unit configured to communicate with the other output device;
a storage unit configured to store an intensity of a host output device;
an intensity transmission unit configured to transmit the intensity of the host output device stored in the storage unit to the other output device through the communication unit;
a comparison unit configured to compare an intensity received from the other output device through the communication unit with the intensity of the host output device which is stored in the storage unit; and
a control unit configured to control so as to perform output based on the output data when the intensity of the host output device is higher than the intensity received from the other output device as a result of the comparison performed by the comparison unit.

5. The output device according to claim 4, further comprising:
a declaration transmission unit configured to transmit a declaration signal for declaring that the host output device performs output to the other output device through the communication unit when the intensity of the host output device is high as a result of the comparison performed by the comparison unit, wherein
the control unit transmits the declaration signal by the declaration transmission unit, but compares the intensity of the other output device which is a transmission source of the declaration signal with the intensity of the host output device when the declaration signal is received from the other output device, and performs control so as not to perform output based on the output data when the intensity of the host output device is lower.

6. A control method of causing a computer of an output device included as a component of an output system together with another output device performing output based on output data to function as:
a storage unit configured to store an intensity of a host output device;
an intensity transmission unit configured to transmit the intensity of the host output device which is stored in the storage unit to the other output device through a communication unit;
a comparison unit configured to compare an intensity received from the other output device through the communication unit with the intensity of the host output device which is stored in the storage unit; and
a control unit configured to control so as to perform output based on the output data when the intensity of the host output device which is stored in the storage unit is higher than the intensity received from the other output device as a result of the comparison performed by the comparison unit.
